# EUROPEAN PATENT APPLICATION

(11) **EP 4 764 181 A1**
(43) Date of publication of application: **24.06.2026**
(21) Application number: 25224861.2
(22) Date of filing: 18.12.2025
(51) Int. Cl.: F02B 43/00, F02B 75/28, F02M 21/02, F02M 21/04, F02B 43/10

(54) **HYDROGEN INTERNAL COMBUSTION ENGINE WITH INJECTION RING**

(30) Priority: 19.12.2024 IT 202400029055
(71) Applicant: FERRARI S.p.A., 41100 Modena (IT)
(72) Inventor: DI SACCO, Michele, 41100 Modena (IT); MEDDA, Massimo, 41100 Modena (IT)
(74) Representative: Studio Torta S.p.A.

(57) **Abstract**

A hydrogen internal combustion engine is provided with at least one cylinder (2) having an inlet (16) to feed oxidizing air into the cylinder (2) and with an outlet (17) to let combustion gases out of the cylinder (2), at least one piston (6, 7) engaged in a sliding manner in the cylinder (2), and an injection unit (21) to feed fuel hydrogen into the cylinder (2); the injection unit (21) having a feeding manifold (22), which extends around at least part of a side wall (5) of the cylinder (2), and communicates with the cylinder (2) through a plurality of feeding holes (24) obtained through the side wall (5) of the cylinder (2).

## Description

### CROSS-REFERENCE TO RELATED APPLICATIONS

This patent application claims priority from Italian patent application no. 102024000029055, filed on December 19, 2024, the entire disclosure of which is incorporated herein by reference.

### TECHNICAL FIELD

The present invention relates to a hydrogen internal combustion engine.

### CONTEXT

In particular, the present invention relates to a hydrogen internal combustion engine of the type comprising at least one cylinder provided with an inlet to feed oxidizing air into the cylinder and with an outlet to let the combustion gases out of the cylinder; at least one piston engaged in a sliding manner in the cylinder; and an injector mounted through a side wall of the cylinder to feed fuel hydrogen into the cylinder.

In this case, the cylinder is engaged in a sliding manner by two opposite pistons, each of which is connected to a relative transmission shaft by means of a relative coupling device comprising a crank mounted to rotate around a rotation axis of the transmission shaft and a connecting rod coupled rotatably to the crank and to the relative piston.

The known hydrogen internal combustion engines of the type described above have certain drawbacks deriving mainly from the fact that direct injection of fuel hydrogen into the cylinder compromises the correct distribution of the fuel hydrogen in the cylinder and correct mixing of the fuel hydrogen and the oxidising air in the cylinder.

### SUMMARY

The object of the present invention is to provide a hydrogen internal combustion engine that is free from the drawbacks described here above and that is simple and economical to manufacture.

According to the present invention, a hydrogen internal combustion engine is provided as claimed in the appended claims.

### BRIEF DESCRIPTION OF THE DRAWINGS

The present invention will now be described with reference to the appended drawings, which illustrate a non-limiting embodiment thereof, wherein:
Figure 1 is a perspective schematic view, with parts removed for clarity, of a preferred embodiment of the internal combustion engine of the present invention;
Figure 2 is a longitudinal schematic section, with parts removed for clarity, of the internal combustion engine of Figure 1; and
Figure 3 is a schematic cross-section, with parts removed for clarity, of the internal combustion engine of Figure 1.

### DESCRIPTION OF EMBODIMENTS

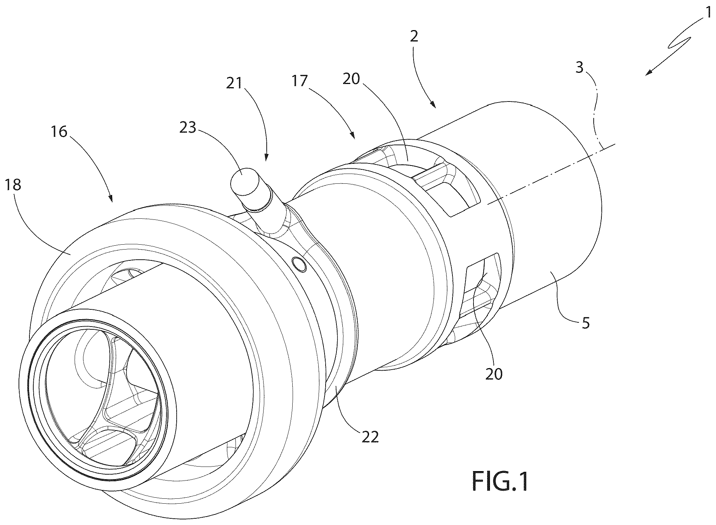

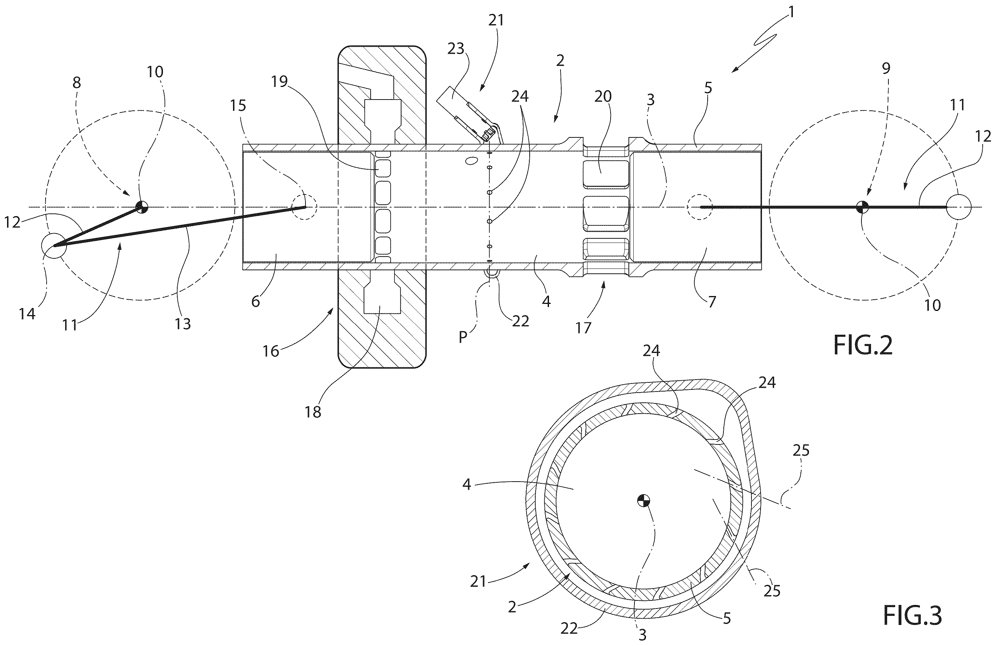

With reference to Figures 1, 2, and 3, the number 1 denotes, as a whole, a hydrogen internal combustion engine, in this case a two-stroke internal combustion engine, comprising at least one cylinder 2, which has a longitudinal axis 3, defines a combustion chamber 4 delimited by a side wall 5 coaxial to the axis 3, and is engaged in a sliding manner by two pistons 6, 7 opposite to each other.

Each piston 6, 7 is connected to a relative transmission shaft 8, 9 mounted to rotate around a rotation axis 10 transverse to the axis 3 through the interposition of a coupling device 11.

The device 11 comprises a crank 12 coupled in an angularly fixed manner to the relative shaft 8, 9 to rotate around the relative axis 10, and a connecting rod 13 extending between two axes 14, 15 parallel to each other and to the axes 10, and of which the axis 14 is the rotation axis between the crank 12 and the connecting rod 13 and the axis 15 is the rotation axis between the piston 6, 7 and the connecting rod 13.

Further, the engine 1 has an inlet 16 to feed oxidizing air into the cylinder 2 and an outlet 17 to let combustion gases out of the cylinder 2.

The inlet 16 comprises a suction manifold 18, which extends around the wall 5 coaxially to the axis 3, and communicates with the cylinder 2 through a plurality of slots 19, which are uniformly distributed around the axis 3, are obtained through the wall 5, and are opened/closed by displacement of the piston 6 along the cylinder 2.

The outlet 17 comprises a plurality of slots 20, which are uniformly distributed around the axis 3, are obtained through the wall 5, and are opened/closed by displacement of the piston 7 along the cylinder 2.

The engine 1 further comprises an injection unit 21 for injecting the fuel hydrogen into the cylinder 2.

The unit 21 comprises a feeding manifold 22, which extends around at least part of the side wall 5 coaxially to the axis 3, and is associated with an injector 23 of known type mounted to feed the fuel hydrogen into the manifold 22.

In this case, the manifold 22 has an annular shape looped around the axis 3.

The manifold 22 communicates with the combustion chamber 4 through a plurality of feeding holes 24, which are distributed, in particular uniformly distributed, around the axis 3, are obtained through the wall 5, and have respective longitudinal axes 25.

The axes 25 are coplanar to a containing plane P perpendicular to the axis 3, and can be radial relative to the axis 3 or tangent to a circumference coaxial to the axis 3.

According to a variant not shown, the axes 25 are inclined relative to the plane P, and can be converging towards the axis 3 or intersecting with each other.

The engine 1 is further provided with a known and not shown spark plug facing the chamber 4 or facing, according to a variant not shown, an ignition pre-chamber communicating with the chamber 4.

The engine 1 has certain advantages, deriving mainly from the fact that feeding of the fuel hydrogen first into the manifold 22 and then into the chamber 4 through the holes 24 guarantees a correct distribution of the fuel hydrogen in the cylinder 2 and an optimal mixing of the fuel hydrogen and the oxidising air in the cylinder 2.

## Claims

1. A hydrogen internal combustion engine comprising at least one cylinder (2) provided with an inlet (16) to feed oxidizing air into the cylinder (2) and with an outlet (17) to let combustion gases out of the cylinder (2); at least one piston (6, 7) engaged in a sliding manner in the cylinder (2); and an injection unit (21) to feed fuel hydrogen into the cylinder (2); and **characterized in that** the injection unit (21) comprises a feeding manifold (22), which extends around at least part of a side wall (5) of the cylinder (2) and communicates with the cylinder (2) through a plurality of feeding holes (24) obtained through the side wall (5) of the cylinder (2).

2. The internal combustion engine according to claim 1, wherein the injection unit (21) further comprises at least one injector (23) connected to the feeding manifold (22).

3. The internal combustion engine according to claim 1 or 2, wherein the feeding holes (24) have respective longitudinal axes (25) coplanar to a containing plane (P) perpendicular to a longitudinal axis (3) of the cylinder (2).

4. The internal combustion engine according to claim 1 or 2, wherein the feeding holes (24) have respective longitudinal axes (25) that are inclined relative to a containing plane (P) perpendicular to a longitudinal axis (3) of the cylinder (2).

5. The internal combustion engine according to claim 4, wherein the longitudinal axes (25) of the feeding holes (24) converge towards the longitudinal axis (3) of the cylinder (2).

6. The internal combustion engine according to any one of the preceding claims, wherein the feeding holes (24) have respective longitudinal axes (25) that are radial relative to a longitudinal axis (3) of the cylinder (2).

7. The internal combustion engine according to any one of the claims from 1 to 5, wherein the feeding holes (24) have respective longitudinal axes (25) that are tangent to a circumference coaxial to a longitudinal axis (3) of the cylinder (2).

8. The internal combustion engine according to any one of the preceding claims, wherein the feeding manifold (22) has an annular shape looped around a longitudinal axis (3) of the cylinder (2).

9. The internal combustion engine according to any one of the preceding claims, wherein the cylinder (2) is engaged in a sliding manner by two opposite pistons (6, 7).
